(19) Europäisches Patentamt
European Patent Office
Office européen des brevets

(11) Publication number: **0 443 863 A2**

# EUROPEAN PATENT APPLICATION

(21) Application number: 91301418.9

(22) Date of filing: 22.02.91

(51) Int. Cl.⁵: **C08G 18/50**, C08G 18/80, C08K 3/22, C09D 175/04

(30) Priority: 23.02.90 JP 42761/90
14.02.91 JP 42566/91

(43) Date of publication of application:
28.08.91 Bulletin 91/35

(84) Designated Contracting States:
BE DE ES FR GB IT NL

(71) Applicant: Tonen Corporation
1-1,Hitotsubashi, 1-Chome Chiyoda-Ku
Tokyo(JP)

Applicant: SHOWA TECHNOCOAT CO LTD
1-4-1 Higashi-Kanda
Chiyoda-ku, Tokyo(JP)

(72) Inventor: Iida, Shigeki
6-22-29-405 Konan, Konan-ku
Yokohama-shi, Kanagawa-ken(JP)

(74) Representative: Woods, Geoffrey Corlett et al
J.A. KEMP & CO. 14 South Square Gray's Inn
London WC1R 5LX(GB)

(54) Compositions for fluororesin hard coat.

(57) A composition suitable for preparing a fluororesin hard coat, which composition comprises:
(i) a functional fluororesin (A) having a unit weight of 1,000-3,000 per one functional group;
(ii) one or more binders (B) selected from isocyanates having two or more reactive groups, block isocyanates having two or more reactive groups, and melamines having two or more reactive groups;
(iii) one or more inorganic organosols (C) having an OH value of 5-100, which organosol is a metal oxide sol, the metal of which is a group III metal (B, Al, Ga, In, Tl, Sc, Y, La, Ac), group IV metal (Si, Ge, Sn, Pb, Ti, Zr, Hf), or group V metal (As, Sb, Bi, V, Nb, Ta); and
(iv) a solvent (D).

EP 0 443 863 A2

The present invention relates to a composition for fluororesin hard coat which have an excellent resistance to weathering and scratching.

The compositions for fluororesin hard coat according to the present invention are useful as painting or coating materials for the surface of inorganic materials such as steel plates, aluminum plates, glass, roof tiles, and slates, and of organic materials such as wood, paper, cellophane, plastics, and so on. The examples of the steel plates include hot rolled steel plates, cold rolled steel plates, electrolytic galvanized steel plates, hot dipped steel plates, alloy plating steel plates, and these plates chemically treated with chromic acid or phosphoric acid, as well as tin plates, tin-free steel plates, and stainless steel plates. Especially, the composition is useful in the fields of household electric machines, architecture/construction (buildings, houses, curtain walls, tanks, plants, marine constructions, bridges and such), transportation vehicles (automobiles, coaches, airplanes and such) and the like.

A fluororesin paint has been known as a representative of the paints resistant to weathering, and in recent years attracts general attention owing to its excellent weather- and corrosion-resistance and good processability.

An acrylic silicon type paint has been developed as a paint more economical and resistant to weathering, but is generally inferior to the fluororesin paint in view of the weather-resistant property.

The fluororesin paints now on the market include Kynar (Pennwalt Corp.), Lumiflon (Asahi Glass Co., Ltd.), Cefral coat (Central Glass Co., Ltd.), Fluonate (Dainippon Ink & Chemicals, Inc.), etc. and commercially available acrylic silicon type paints include Gemlac (Kanegafuchi Chemical Industry Co., Ltd.), Acrydic (Dainippon Ink & Chemicals, Inc.), Clearmer (Sanyo Chemical Industries, Ltd.), etc.

US patent No. 3,762,940 discloses a coating composition of fluoropolymer and a methylmelamine crosslinking agent. In this patent, the fluoropolymer should have a unit weight no greater than 700 per hydroxyl group. Although the composition may contain silica, the resulting silica-containing polymer is less adherent, and better scratch-resistance is observed only at a low silica content.

Although the fluororesin paint is excellent in resistance to weathering and corrosion, and also in processability, there is a serious problem that the paint is susceptible to mechanical damages such as scratching and wearing because of its low hardness.

As a result of extensive studies, the present inventor has found that when a composition comprising a functional fluororesin having a specific unit weight per functional group, a specific binder, an inorganic organosol having a specific OH value and a solvent is applied onto a substrate and cured at an ordinary temperature, or baked under a high temperature, the inorganic organosol is bound to the fluororesin via the binder upon crosslinking, to result in formation of a fluororesin hard coat that has both the weather-resistance derived from the fluororesin and the hardness from the organosol.

Namely, the present invention provides a composition for fluororesin hard coat comprising a functional fluororesin (A) having a unit weight of 1,000-3,000 per one functional group; one or more binders (B) selected from isocyanates having two or more reactive groups, block isocyanates having two or more reactive groups, melamines having two or more reactive groups, and mixtures thereof; one or more inorganic organosols (C) having an OH value of 5-100 and selected from metal oxide sols and mixtures thereof, the metals of which being selected from group III metals (B, Al, Ga, In, Tl, Sc, Y, La, Ac), group IV metals (Si, Ge, Sn, Pb, Ti, Zr, Hf), and group V metals (As, Sb, Bi, V, Nb, Ta) in long form of the periodic table; and a solvent (D).

The composition according to the invention provides a weather-resistant and scratch-resistant hard coat.

The composition according to the invention comprises a functional fluororesin (A), one or more binders (B), one or more inorganic organosols (C) and a solvent (D).

The functional group in the functional fluororesin (A) of the present invention includes hydroxyl group, carboxyl group, or amino group. Hydroxyl group is in particular preferred. It is possible to employ as the functional fluororesin (A) a copolymer having a unit weight of 1,000-3,000 per one functional group selected from copolymers of a fluorine-containing vinyl monomer and a vinyl monomer containing a functional group, or terpolymers of a fluorine-containing vinyl monomer, a vinyl monomer containing a functional group and a third copolymerizable vinyl monomer.

For obtaining a hard coat having excellent hardness, scratch-resistance, flexibility and weather-resistance, the unit weight is necessarily in the range of 1,000-3,000, preferably 1,500-2,000. Lower unit weight than 1,000 may deteriorate the flexibility and higher unit weight than 3,000 may lower the hardness and scratch-resistance.

The fluorine-containing vinyl monomer includes vinyl fluoride, vinylidene fluoride, trifluoroethylene, tetrafluoroethylene, bromotrifluoroethylene, chlorotrifluoroethylene, pentafluoropropylene, hexafluoropropylene, (per-)fluoroalkyl trifluorovinyl ether. It is particularly preferable to utilize the compounds that have a relatively larger content of fluorine atom in their molecules.

2

Among the vinyl monomers having the functional group, the vinyl monomers containing hydroxyl group include hydroxyalkyl vinyl ether such as hydroxyethyl vinyl ether, hydroxypropyl vinyl ether, and hydroxybutyl vinyl ether; and hydroxyalkyl (meth)acrylate such as 2-hydroxyethyl (meth)acrylate, 2-hydroxypropyl acrylate, and diethylene glycol mono(meth)acrylate. The vinyl monomers containing carboxyl group include acrylic acid, methacrylic acid, maleic acid, maleic anhydride, itaconic acid, itaconic anhydride, fumaric acid. The vinyl monomers containing amino group include dimethylaminoethyl vinyl ether, dimethylaminopropyl vinyl ether, N,N-dimethylaminopropyl(meth)acrylamide, dimethylaminoethyl (meth)acrylate, etc.

Other copolymerizable vinyl monomers as the third monomer include the following: alkyl vinyl ethers such as ethyl vinyl ether, n-butyl vinyl ether, isobutyl vinyl ether, and cyclohexyl vinyl ether; vinyl esters of straight or branched aliphatic carboxylic acids such as vinyl acetate, vinyl propionate, vinyl butyrate, vinyl pivalate, vinyl caproate, vinyl capriate, vinyl caprylate, vinyl versatate, vinyl laurate and vinyl stearate; vinyl esters of alicyclic carboxylic acids such as vinyl cyclohexanecarboxylate; vinyl esters of aromatic carboxylic acids such as vinyl benzoate, vinyl p-t-butyl benzoate and vinyl salicylate; vinyl monomers containing epoxy group such as glycidyl vinyl ether and glycidyl methacrylate; vinyl monomers containing carboxyl group such as acrylic acid, methacrylic acid, maleic acid, maleic anhydride, itaconic acid, itaconic anhydride, fumaric acid, monoethyl maleate, monobutyl maleate, monobutyl fumarate, monobutyl itaconate, monovinyl adipate and monovinyl sebacate; vinyl monomers containing amino group such as dimethylaminoethyl vinyl ether, dimethylaminopropyl vinyl ether, N,N-dimethylaminopropyl(meth)acrylamide and dimethylaminoethyl (meth)acrylate; vinyl monomers containing halogens other than fluorine such as vinyl chloride and vinylidene chloride; aromatic vinyl monomers such as styrene, α-methylstyrene, vinyltoluene and vinylpyridine; (meth)acrylic acid esters such as methyl (meth)acrylate, ethyl (meth)acrylate, butyl (meth)acrylate, 2-ethylhexyl (meth)acrylate, lauryl (meth)acrylate, cyclohexyl (meth)acrylate and β-hydroxyethyl (meth)-acrylate; (meth)acrylonitrile; (meth)acrylamide; N-methylol (meth)acrylamide; N-butoxymethyl(meth)-acrylamide; malediamide, etc.

Two or more fluorine-containing vinyl monomers, vinyl monomers containing the functional group and other copolymerizable vinyl monomers may be used in combination.

The following can be mentioned as examples of the commercially available fluororesins: "Lumiflon" by Asahi Glass Co., Ltd., "Cefral coat" by Central Glass Co., Ltd., "Fluonate" by Dainippon Ink & Chemicals, Inc., and "Neoflon" by Daikin Industries, Ltd.

The binder (B) should be selected from isocyanates having two or more functional groups, block isocyanates having two or more functional groups or melamines having two or more functional groups. Single compound, or two or more compounds in combination, may be added to the functional fluororesin.

The isocyanates may be aliphatic compounds, alicyclic compounds, aromatic compounds, other polyisocyanate compounds and modified compounds thereof. However, it is preferable to use so-called non-yellowing polyisocyanate compounds having isocyanate groups not directly connected with the aromatic nuclei, because the use of the compounds prevents the coat from weathering and, especially, from yellowing. The following can be cited as the examples of such non-yellowing polyisocyanates: hexamethylene diisocyanate, 1,4-cyclohexanebis(methylisocyanate), methylenebis(cyclohexylisocyanate), cyclohexylmethane diisocyanate, isophorone diisocyanate, 2-isocyanatoethyl 2,6-diisocyanate hexanoate, 2,6-diisocyanate methylcaproate, dimeril diisocyanate, dianisidine diisocyanate, cyanuric acid, isocyanuric acid and modified compounds thereof. Such modified compounds include various types such as trimer, dimer, prepolymer, burette, urea and others. Among them the trimer type, prepolymer type including the one modified with trimethylol propane, and the burette type are preferred. In some cases, aromatic yellowing polyisocyanate compounds can be used instead of, or in combination with, such non-yellowing polyisocyanates.

In this specification the block isocyanates mean blocked isocyanate compounds in which the corresponding isocyanate groups are generated by elimination of the blocking group under the following curing conditions. The block isocyanates can be produced by blocking the polyisocyanates described above. The blocking agent to be used for such blocking purpose can be selected, depending on the purpose and curing conditions, from various conventional blocking agents. Their examples include lactam type blocking agents such as ε-caprolactam; oxime type blocking agents such as acetoxime, methyl ethyl ketoxime, methyl isoamyl ketoxime, and methyl isobutyl ketoxime; phenol type blocking agents such as phenol, cresol, catechol, and nitrophenol; alcohol type blocking agents such as isopropanol and trimethylol propane, and active methylene type blocking agents such as malonic acid ester and acetoacetic acid ester. The lactam type and oxime type blocking agents are preferably used.

Generally, it is preferable to include the isocyanate into a composition for hard coat which is cured at an ordinary temperature, and the block isocyanate into a composition which is cured under baking. Two or more binders may be used in combination.

The following compounds may be mentioned as the examples of the melamines: dimethylol melamine, trimethylol melamine, tetramethylol melamine, pentamethylol melamine, hexamethylol melamine, isobutyl ether type melamines, n-butyl ether type melamines, butylated benzoguanamine and the like.

The inorganic organosol (C) may be selected from metal oxide sols having an OH value of 5-100 and mixtures thereof, the metals of which being selected from group III metals (B, Al, Ga, In, Tl, Sc, Y, La, Ac), group IV metals (Si, Ge, Sn, Pb, Ti, Zr, Hf), and group V metals (As, Sb, Bi, V, Nb, Ta) in long form of the periodic table. The preferred inorganic organosols include metal oxide sols of which metals are selected from Si, Al, Sn, Ti, and Zr.

The OH value means a milligram value of KOH equimolar to the OH group contained in 1 g of solid mass of the organosol. That is, when the value is small, there is less OH groups in 1 g of the solid mass. The OH value was measured according to the analytical method described in R. C. Smith and G. E. Kellum, Anal. Chem., 39, 338 (1967). That is, the silanol group in organosilica sol is dehydrated in the presence of $BF_3$ to form siloxane bond and the amount of water formed is measured, after azeotropic distillation, according to Karl-Fischer titration. The value is corrected with initial water content in the sample and the reagents for the analysis, as well as the amount of water contaminated during the analysis which are measured by blank tests.

The OH value of the inorganic organosols used in the invention is necessarily in the range of 5-100, preferably 10-70. Too low OH value may not contribute the improvement of the hardness and, on the other hand, too high OH value may impair the homogeneity and gloss of the coat owing to the unacceptable compatibility between the organosol and the fluororesin, and lower the weather-resistance of the resulting hard coat.

The mixing ratio of the functional fluororesin (A), the binder (B) and the inorganic organosol (C) is preferably 10-80% by weight of (A), 10-50% by weight of (B) and 5-60% by weight of (C), and more preferably, 15-45% by weight of (A), 15-45% by weight of (B) and 15-35% by weight of (C).

The solvent (D) may be one which can dissolve (or at least stably disperse) the above components and which can be used in any amount appropriate for dissolving them. In particular, the preferred are the organic solvents in which the functional fluororesin (A) is highly soluble. The examples of the solvents include aromatic hydrocarbon solvents such as xylene and toluene, ester type solvents such as butyl acetate, ketone type solvents such as methyl isobutyl ketone and cyclohexanone, glycol ether type solvents such as ethyl cellosolve, diethylene glycol ester type solvents such as carbitol acetate, and a variety of thinners. Naturally, the solvent is not limited to the above, and may be others such as other hydrocarbons, halogenated hydrocarbons, alcohols, phenols, acetals, esters, ethers, ketones, etc. The solvent can be appropriately chosen from the above, depending on the type and conditions of a substrate to be coated, the vaporization rate, working environment and other conditions. The ketone type solvent is particularly preferred because it provides a hard coat of good performance.

The composition according to the present invention may preferably contain a reaction-accelerating catalyst (E) which may accelerate curing of the coated composition and therefore improve the workability.

As the catalyst (E), a basic curing catalyst can be used other than an acidic one. The following may be mentioned as representative examples of the basic catalyst: organotin compounds such as dibutyltin dilaurate, dibutyltin diacetate, and stannous octoate; and amine catalysts such as methylimidazole, acridine, triethylamine, hexadecyltrimethylammonium stearate. The acid catalyst is not necessarily an strong acid and the examples include organic sulfonic acids such as methanesulfonic acid, dodecylbenzenesulfonic acid, and toluenesulfonic acid. At least one of the basic or acid catalysts is preferably used as the catalyst (E), and further it may be used in combination with a co-catalyst.

The composition according to the present invention may also contain other optional components in addition to the above essential components of (A) to (D) and the optional catalyst (E). For example, when the composition is used as a paint, it is also possible to add a pigment (F) to the composition.

The following can be cited as the examples of the pigment (F): inorganic pigments such as chrome yellow, molybdate orange, iron blue, cadmium pigments, titanium white, complex oxide pigments, and clear iron oxides; and organic pigments such as cyclic high-grade pigments, soluble azo pigments, insoluble azo pigments, copper phthalocyanine, staining pigments, and intermediates for pigments.

In addition, other additives such as coloring agents, thixotropic agents, filling agents, thickening agents, levelling agents, deforming agents, stabilizing agents can be added.

The composition according to the invention can be prepared by mixing the above components in a conventional manner.

The composition of the present invention is applied onto a substrate by the use of conventional means such as a sprayer, brush and coat roller, and is left at room temperature for 1 to 10 days to harden, or cured by heating at 60-250° C for 1 to 30 minutes.

The composition according to the present invention is equal to, or superior to, the conventional fluororesin paints in the weather-resistance and water-repellency of the resulting hard coat, and is excellent in its scratch-resistance and dirt-resistance because of its improved surface hardness and higher glass transition temperature. The resulting hard coat also shows good flexibility. Thus, the composition can be applied to the field of architecture and construction such as curtain walls, sashes, plants and marine constructions, and to transportation vehicles such as automobiles and coaches.

Examples:

The present invention is further illustrated in detail with reference to the following examples. It should be understood that the present invention is not limited solely to these examples.

Example 1 and Comparative Example 1

Compositions for hard coat were prepared by mixing the following components in a ratio specified in Table 1. The amount of a given component is expressed as a weight part relative to 100 weight parts of a solution of the fluororesin containing hydroxyl group (A) . A substrate used was a stainless steel plate (SUS 304) of 0.3mm thickness onto which the above composition was applied in such a way as to give a coat of about $20\mu$ thickness after curing, and the coat was cured by baking at the temperature and for the period specified in Table 1. The physical properties of the resulting coat were measured, and the results are shown in Table 1.

1) Fluororesin containing hydroxyl group:
Cefral coat A-101B (unit weight: 1,650-2,000) .....(A-1)
(non-volatile mass: 55%, solvent: butyl acetate )
2) Block isocyanate compound:
Modified hexamethylene diisocyanate ...............(B)
(non-volatile mass: 75%, solvent: ethyl acetate)
Blocking agent: methyl ethyl ketoxime
3) Inorganic organosol:
Organotitania sol (OH value: 15) .................(C-1)
(non-volatile mass: 30%, solvent: isopropyl alcohol)
Organosilica sol (OH value 22) ....................(C-2)
(non-volatile mass: 30%, solvent: isopropyl alcohol)
4) Curing catalyst:
Dibutyltin dilaurate (E)
5) Solvent:
Cyclohexanone type solvent (D)

Evaluation method of the resulting coat properties:
(1) Gloss: 60° reflectance as specified in JIS K 5400.
(2) Hardness: pencil hardness as specified in JIS K 5400.
(3) Bending: tested by means of bending tester, $\Phi$ 2mm.
The open circle indicates "acceptable" and the open triangle, "virtually acceptable".
(4) Xylene: wiping test with xylene which indicates solvent resistance of the coat.
">200" indicates that 200 wipings with xylene can not expose substrate surface.
(5) Weather-resistance:
accelerated weathering test by Sunshine Weather-O-meter exposure for 5,000 hours.
"Ex" indicates a gloss retention of 90% or more.
"Gd" indicates a gloss retention of 85% or more.

## Table 1

### (Example 1 and Comparative Example 1)

| Composition | 1 | 2 | 3 | 4 | 5 | 6 | Comparative Example 1 |
|---|---|---|---|---|---|---|---|
| Isocyanate B | 50 | 75 | 75 | 50 | 75 | 75 | 25 |
| Organosol C-1 | 55 | 90 | 185 | -- | -- | -- | -- |
| C-2 | -- | -- | -- | 55 | 90 | 185 | -- |
| Catalyst E | 0.5 | 0.5 | 0.5 | 0.5 | 0.5 | 0.5 | 0.5 |
| Solvent D | 67 | 79 | 56 | 67 | 79 | 56 | 59 |
| Baking condition 160°C (min.) | 20 | 20 | 20 | 20 | 20 | 20 | 20 |

| Physical properties of coat | | | | | | | |
|---|---|---|---|---|---|---|---|
| Gloss | 90 | 87 | 85 | 91 | 88 | 86 | 90 |
| Hardness | 3H | 4H | 5H | 4H | 5H | 6H | 2H |
| Bending | O | O | O | O | O | Δ | O |
| Xylene | 150 | 200 | >200 | 200 | >200 | >200 | 100 |
| Resistance to weathering | Ex | Ex | Gd | Ex | Ex | Gd | Ex |

Comparative Example 2

A composition for hard coat was prepared by mixing the components of composition 4 in Table 1 using an organosilica sol having larger OH value (OH value: 170, non-volatile mass: 30%, solvent: isopropyl alcohol) instead of the organosilica sol C-2 to form a white suspension. The resulting composition is inferior to composition 4 in view of paintability, levelling property, transparency, and homogeneity and gave no good hard coat.

Example 2

Compositions for hard coat were prepared by mixing the following components and the same block isocyanate, curing catalyst and solvent as used in Example 1 in a ratio specified in Table 2. The amount of a given component is expressed as a weight part relative to 100 weight parts of a solution of the fluororesin containing hydroxyl group (A-2). The painting conditions are same as in Example 1. Table 2 shows properties of the resulting coat.
1) Fluororesin containing hydroxyl group
Lumiflon (unit weight: 1750) .....................(A-2)

6

(non-volatile mass: 60%, solvent: xylene)
2) Inorganic organosol
Organosilica sol (OH value: 52) .................(C-3)
(non-volatile mass: 30%, solvent: methyl isobutyl ketone)

## Table 2

### (Example 2)

| Composition | 7 | 8 |
|---|---|---|
| Isocyanate<br>B | 50 | 75 |
| Organosol<br>C-3 | 57 | 85 |
| Catalyst<br>E | 0.5 | 0.5 |
| Solvent<br>D | 70 | 82 |
| Baking condition<br>160°C (min) | 20 | 20 |

| Physical properties of coat | | |
|---|---|---|
| Gloss | 89 | 87 |
| Hardness | 4H | 5H |
| Bending | O | O |
| Xylene | 200 | >200 |
| Resistance to weathering | Ex | Ex |

Comparative Example 3

A fluororesin prepared according to the following conventional method (for example, Japanese Patent Publication (Kokoku) No. 48-32423) was used as the fluororesin containing hydroxyl group.

To a 10 litter reactor were charged 5.5 liters of t-butyl alcohol, 26 g of anhydrous potassium carbonate, 330 g of 4-hydroxybutyl vinyl ether, 0.9 g of azoisobutyronitrile, and 390 g of tetrafluoroethylene. The whole was heated at 65°C under stirring to polymerize the monomers. Pure water was added into the reaction mixture to separate the fluororesin formed. The resin was washed with pure water and dried to give a white fluororesin (OH value: 74.8, unit weight per one hydroxyl group: 750). The OH value was measured

7

according to a general method for organic polymers, i.e., a method of titrating the amount of acetic acid formed during the reaction of an organic polymer containing hydroxyl group with an acetylating agent composed of acetic anhydride and pyridine.

A 30% by weight of butyl acetate solution of the fluororesin (A-3) was prepared by adding butyl acetate to the fluororesin obtained. Compositions for hard coat were prepared by mixing the solution of the resin (A-3) and the same organosol (C-2), block isocyanate and curing catalyst as used in Example 1 in a ratio specified in Table 3. The amounts of the components are expressed as weight parts relative to 100 weight parts of a solution of the fluororesin containing hydroxyl group (A-3). The painting conditions are same as in Example 1. Table 3 also shows properties of the resulting coat.

## Table 3

### (Comparative Example 3)

| Composition | 9 | 10 |
|---|---|---|
| Isocyanate B | 27 | 41 |
| Organosol C-2 | 30 | 49 |
| Catalyst E | 0.3 | 0.3 |
| Baking condition 160°C (min) | 20 | 20 |

| Physical properties of coat | | |
|---|---|---|
| Gloss | 87 | 84 |
| Hardness | 5H | 6H |
| Bending | Δ | Δ |
| Xylene | >200 | >200 |
| Resistance to weathering | Ex | Ex |

## Claims

1. A composition suitable for preparing a fluororesin hard coat, which composition comprises:

(i) a functional fluororesin (A) having a unit weight of 1,000-3,000 per one functional group;

(ii) one or more binders (B) selected from isocyanates having two or more reactive groups, block isocyanates having two or more reactive groups, and melamines having two or more reactive groups;

(iii) one or more inorganic organosols (C) having an OH value of 5-100, which organosol is a metal oxide sol, the metal of which is a group III metal (B, A1, Ga, In, Tl, Sc, Y, La, Ac), group IV metal (Si, Ge, Sn, Pb, Ti, Zr, Hf), or group V metal (As, Sb, Bi, V, Nb, Ta); and

(iv) a solvent (D).

2. A composition according to claim 1, which further comprises a reaction-accelerating catalyst (E).

3. A composition according to claim 1 or 2, wherein the metal in the inorganic organosol (C) is Si, Al, Sn, Ti or Zr.

4. A composition according to any one of claims 1 to 3, wherein the functional fluororesin (A) has a unit weight of 1,500-2,000 per one functional group.

5. A composition according to any one of claims 1 to 4, wherein the inorganic organosols (C) have an OH value of 10-70.

6. A composition according to any one of claims 1 to 5, wherein the composition contains 10-80% by weight of the functional fluororesin (A), 10-50% by weight of the binders (B), 5-60% by weight of the inorganic organosols (C), the remainder being the solvent (D).

7. A composition according to any one of claims 1 to 6, which further comprises a pigment (F).

8. A process for preparing an article coated with a fluororesin, which comprises coating the article with a composition as defined in any one of the preceding claims and curing the composition.